# EUROPÄISCHE PATENTSCHRIFT

(11) **EP 0 911 370 B1**
(45) Veröffentlichungstag und Bekanntmachung des Hinweises auf die Patenterteilung: **17.07.2002**
(21) Anmeldenummer: 98118978.0
(22) Anmeldetag: 07.10.1998
(51) Int. Cl.: C09C 1/24, C01G 49/06

(54) **Eisenoxidgelbpigmente, Verfahren zur Herstellung von Eisenoxidgelbpigmenten und deren Verwendung**
Yellow iron oxide pigments, process for its preparation and its use
Pigments d'oxyde de fer jaune, procédé pour leur préparation et leur utilisation

(30) Priorität: 20.10.1997 DE 19746263
(43) Veröffentlichungstag der Anmeldung: 28.04.1999
(73) Patentinhaber: BAYER AG, 51368 Leverkusen (DE)
(72) Erfinder: Braun, Rolf-Michael, Dr., 47802 Krefeld (DE); Bayer, Eckhard, Dr., 47807 Krefeld (DE); Meisen, Ulrich, Dr., 47829 Krefeld (DE)

(56) Entgegenhaltungen:
- EP-A- 0 691 307
- EP-A- 0 704 498
- US-A- 4 321 249
- CHEMICAL ABSTRACTS, vol. 113, no. 6, 6. August 1990 Columbus, Ohio, US; abstract no. 44190, XP002091493 & CN 1 033 786 A (HONGDU STEELWORK)

## Beschreibung

Die vorliegende Erfindung betrifft Eisenoxidgelbpigmente, ein Verfahren zur Herstellung von Eisenoxidgelbpigmenten nach dem Fällungsverfahren aus Eisen-(II)-chlorid und einer alkalischen Komponente sowie deren Verwendung.

Fällungsverfahren zur Herstellung von Eisenoxidgelbpigmenten sind seit langem bekannt. Der typische Verlauf dieser Verfahren ist beispielsweise in Ullmanns Enzyklopädie der technischen Chemie, Auflage 5, Band A20, Seiten 297 ff. beschrieben. Als Rohstoff wird gewöhnlich Eisen-II-sulfat, das beim Abbeizen von Stahlblechen anfällt, oder auch Eisen-II-sulfat, das bei der Produktion von Titandioxid nach dem Sulfatverfahren anfällt, verwendet.

Bei der Herstellung von synthetischem Rutil für die TiO₂-Herstellung fallen große Mengen an FeCl₂ an. In der Beizereiindustrie ist seit Jahren ein verstärkter Trend zum Einsatz von Salzsäure als Beizmittel zu beobachten, so daß auch hier große Mengen an FeCl₂ anfallen. Weiterhin wird zur Herstellung von Titandioxid weltweit verstärkt das sogenannte Chloridverfahren angewendet. Aus diesen Verfahren fallen also verstärkt Eisen-II-chlorid enthaltende Lösungen an, die möglichst zu einem Wertstoff umgearbeitet werden sollen.

Ein gängiges Verfahren zur Verwertung von FeCl₂-Abfallösungen ist das Sprühröstverfahren, bei dem Eisen-II-chlorid oder auch Eisen-III-chlorid bei hohen Temperaturen (typischerweise bei mehr als 1 000°C) einer oxidativen Hydrolyse unterworfen wird. Als Endprodukte entstehen hier Eisenoxide, typischerweise Hämatit, und Salzsäure, die ebenfalls als Wertstoff wieder z.B. in den Beizereiprozess zurückgeführt werden kann.

Es wird hierbei ohne besondere Reinigungsschritte ein Eisenoxid erhalten, das in der Regel zur Herstellung von Hartferriten geeignet ist. Sollen aus derartig erhaltenen Eisenoxiden Weichferrite hergestellt werden, so muß die verwendete Eisenchloridlösung vorher zusätzlichen Reinigungsoperationen unterworfen werden, wodurch das Verfahren deutlich verteuert wird. Da immer mehr Eisenchlorid, größtenteils minderer Qualität, anfällt, und die Aufnahmefähigkeit des Ferritmarktes begrenzt ist, wird eine Alternative zur Herstellung eines Wertstoffs aus diesen Eisenchloriden gesucht. Eine direkte Deponierung oder Verklappung der Eisenchloridlösungen ist aus ökologischen Gründen nicht möglich.

Aufgabe der vorliegenden Erfindung war es daher, ein Verfahren zur Verfügung zu stellen, das es gestattet, Eisenchloridlösungen auf kostengünstige und möglichst einfache Weise in hochwertige Wertstoffe umzuwandeln.

Diese Aufgabe konnte durch die erfindungsgemäßen Eisenoxidgelbpigmente und das erfindungsgemäße Verfahren gelöst werden.

Gegenstand der Erfindung sind Eisenoxidgelbpigmente mit einer Helligkeit L* im Purton von 62,0 bis 64,0 CIELAB-Einheiten, einem a*-Wert von 8,5 bis 10,5 CIELAB-Einheiten, einem b*-Wert von 48,5 bis 50,5 CIELAB-Einheiten, einer Helligkeit L* in der Aufhellung von 81,6 bis 82,5 CIELAB-Einheiten, einem a*-Wert von 3,8 bis 4,8 CIELAB-Einheiten, einem b*-Wert von 37,5 bis 39,5 CIELAB-Einheiten, einem Chromgehalt von weniger als 40 mg/kg Eisenoxidgelbpigment, einem Chloridgehalt von mindestens 0,05 Gew.-% und weniger als 0,3 Gew.-%, bezogen auf Eisenoxidgelbpigment und einem Mangangehalt von 0,007 bis 0,055 Gew.-%, bezogen auf Eisenoxidgelbpigment.

Ein weiterer Gegenstand der Erfindung ist ein Verfahren zur Herstellung von Eisenoxidgelbpigmenten nach dem Fällverfahren, dadurch gekennzeichnet, dass
a) zu einer sauren Fe-II-chloridlösung mit einem FeCl₂-Gehalt von 50 bis 450 g/l eine alkalische Komponente unter intensivem Rühren in einer Menge zugegeben wird, die ausreicht, um den pH-Wert der Lösung zwischen 3 und 5 einzustellen,
b) gegebenenfalls zusätzlich ein Flockungshilfsmittel vor oder nach der Zugabe der alkalischen Komponente oder gemeinsam mit der alkalischen Komponente der Lösung zugegeben wird,
c) gegebenenfalls nach der Zugabe der alkalischen Komponente und des gegebenenfalls zugesetzten Flockungshilfsmittels oxidiert wird,
d) der nach der Behandlung unter a) bis c) anfallende Feststoff von der Lösung abgetrennt wird,
e) die unter d) angefallene Lösung zu einer nach dem Fällverfahren hergestellten α-FeOOH-Keimsuspension zugegeben wird und zwar in einer Menge, die der 4- bis 8-fachen molaren Menge an Eisen der gesamten Keimsuspension (also Eisen aus Eisenoxidhydroxid und Eisen aus nichtumgesetzter Eisenverbindung) entspricht,
f) die unter e) angefallene Suspension auf eine Temperatur von 30 bis 95°C, bevorzugt 30 bis 85°C, besonders bevorzugt von 55 bis 75°C, unter guter Durchmischung aufgeheizt wird,
g) anschließend mit einem Oxidationsmittel oxidiert wird, wobei das Oxidationsmittel so zugegeben wird, daß 0,5 bis 10 mol-% Eisen pro Stunde, bevorzugt 0,5 bis 2,0 mol-% Eisen pro Stunde, oxidiert werden, und gleichzeitig der pH-Wert mit einer alkalischen Komponente mit einer Geschwindigkeit von 0,01 bis 0,4 pH-Werteinheiten/Stunde auf einem End-pH-Wert von 3,0 bis 5,0 erhöht wird,
h) gegebenenfalls bei konstantem pH-Wert zwischen 3,0 und 5,0 weiter oxidiert wird,
i) die Oxidation beendet wird, sobald der Fe-II-Gehalt der Suspension kleiner als 1 mol-% ist,
j) abschließend der Feststoff aus i) abgetrennt, gewaschen, getrocknet und gemahlen wird.

Bevorzugt werden als alkalische Komponente Natronlauge, Natriumcarbonat, Magnesiumcarbonat, Magnesiumoxid, Magnesiumhydroxid, Calciumoxid, Calciumhydroxid oder Ammoniak eingesetzt.

Es können Eisen-II-chloridlösungen aus Stahlbeizen oder auch Eisen-II-chloridlösungen aus der TiO₂-Produktion nach dem Chloridverfahren eingesetzt werden.

Das erfindungsgemäße Verfahren kann vorteilhaft folgendermaßen durchgeführt werden:

Zu einer Eisen-II-chloridlösung mit einem FeCl₂-Gehalt zwischen 50 und 450 g/l wird unter intensivem Rühren soviel Natronlauge zugegeben, daß sich ein pH-Wert von 3 bis 5 einstellt. Anstelle der Natronlauge kann auch eine andere alkalische Komponente, wie z.B. Ca(OH)₂, Na₂CO₃ oder Ammoniak etc., verwendet werden. Weiterhin kann das Sedimentationsverhalten des anfallenden Hydroxid- oder Carbonatschlamms durch Zugabe einer Flockungshilfsmittels verbessert werden. Es können die bekannten Flockungshilfsmittel, wie z.B. Polyacrylate oder andere ähnlich wirkende Stoffe, eingesetzt werden. Zur Verbesserung des Absetzverhaltens kann gegebenenfalls zusätzlich eine anschließende Oxidation erfolgen. Diese kann zudem bewirken, daß verschiedene Metallkationen in höherwertige Oxide oder Oxyhydroxide übergehen, die leichter abtrennbar sind.

Die Abtrennung des angefallenen Hydroxid- oder Carbonatschlamms kann durch Sedimentation, Filtration oder Trennung mit einem Separator erfolgen. Die optimale Auswahl des geeigneten Apparats bzw. der geeigneten Methode hängt von den genauen Versuchsbedingungen, den Mengenströmen und den eingesetzten Rohstoffen ab.

Zu einer nach dem Fällungsverfahren hergestellten α-FeOOH-Keimsuspension, in der die Keime eine BET-Oberfläche von beispielsweise 65 m²/g aufweisen, wird die oben hergestellte Eisen-II-chloridlösung in einer Menge, die der 4- bis 8-fachen molaren Menge an Eisen des gesamten Keims (also Eisenoxidhydroxid und nicht umgesetztes FeCl₂) entspricht, zugesetzt. Die erhaltene Suspension wird vorzugsweise unter Rühren auf eine Temperatur zwischen 30 und 95°C, bevorzugt zwischen 30 und 85°C, besonders bevorzugt zwischen 55 und 75°C, gebracht. Nach Erreichen dieser Temperatur wird mit einem Oxidationsmittel oxidiert und gleichzeitig der pH-Wert mit einer Geschwindigkeit von 0,01 bis 0,4 pH-Werteinheiten/Stunde auf einen End-pH-Wert von 3,0 bis 5,0 gesteigert. Die Oxidationsgeschwindigkeit, die von der Zugabegeschwindigkeit des Oxidationsmittels, der Temperatur, der Durchmischung im Behälter und vom pH-Wert abhängt, sollte vorzugsweise zwischen 0,5 und 10 mol-% Eisen pro Stunde, besonders bevorzugt zwischen 0,5 mol-% und 2,0 mol-% Eisen pro Stunde, liegen. Liegt die Oxidationsgeschwindigkeit wesentlich unter dem unteren Grenzwert, so wird das Verfahren unwirtschaftlich; liegt die Oxidationsgeschwindigkeit sehr deutlich über dem oberen Grenzwert, so wird ein unerwünscht rotstichiges Eisenoxidgelbpigment erhalten.

Die Aufarbeitung der Pigmentsuspension erfolgt durch die bekannten Schritte Filtration, Trocknung und Mahlung.

Als Oxidationsmittel können beispielsweise eingesetzt werden:
- Luftsauerstoff
- reiner Sauerstoff
- Ozon
- H₂O₂
- Natriumhypochlorit oder Chlorlauge oder Calciumhypochlorit
- Chlorite oder Chlorate
- Perchlorate
- Nitrate
- Chlor

Die Oxidation wird bevorzugt beendet, sobald der Fe-II-Gehalt der Suspension kleiner als 1 mol-% ist. Eine weitergehende Oxidation bis zur vollständigen Umsetzung kann durchgeführt werden.

Neben dem Einsatz von Eisen-II-chloridlösungen können auch Mischungen von Eisen-II-chlorid- und Eisen-II-sulfat-lösungen sowohl bei der Keimherstellung als auch bei der Pigmentherstellung eingesetzt werden. Die bevorzugte Ausführungsform ist jedoch der ausschließliche Einsatz von Eisen-II-chloridlösungen. Es können auch z.B. bei der TiO₂-Produktion nach dem Chlorid-Verfahren anfallende Eisen-IIIchloride verwendet werden, wie sie vorher mit metallischem Eisen zu Eisen-II-chlorid reduziert worden sind.

Die erhaltenen Eisenoxidgelbpigmente sind besonders für die Einfärbung von Kunststoffen, Papier und zur Herstellung von Farbmittelzubereitungen, wie Dispersionsfarben, Lacken und Farben geeignet. Sie können zur Einfärbung von Baustoffen eingesetzt werden. Des weiteren sind sie zur Herstellung von Farbmitteln für die Lebensmittelindustrie geeignet.

Die in den folgenden Beispielen aufgeführten Teile und Prozente beziehen sich auf das Gewicht, soweit nicht anders vermerkt.

Die Bestimmung des Farbtons erfolgt nach unten aufgeführter Vorschrift.

### 1. Präparation in einem Alkydharzlack zur Messung des Purtons

| | | | |
|---|---|---|---|
| Pigmenteinwaagen | Fe-Rot | (Hämatit) | 1,00 g |
| | Fe-Gelb | (Goethit) | 0,80 g |
| | Fe-Schwarz | (Magnetit) | 1,00 g |

Das Pigment wird mit einer Teller-Farbenausreibmaschine (Muller) in einem nichttrocknenden Prüfbindemittel präpariert. Das Prüfbindemittel (Paste) besteht aus zwei Komponenten.

### Komponente 1:

Komponente 1 ist ein Alkydharz-Bindemittel auf Basis Leinöl und Phthalsäureanhydrid. Es entspricht den Spezifikationen, die in den Normen DIN EN ISO 787-24 (Oktober 1995), ISO 787-25:1993 und DIN 55983 (Dezember 1983) als Anforderungen an ein Prüfbindemittel für Farbpigmente genannt werden. Zur Anwendung kommt das Produkt ®SACOLYD L 640 (Krems Chemie), ehemals ®ALKYDAL L 64 (Bayer AG).

### Komponente 2:

Komponente 2 ist ein rheologisches Additiv, welches zum Erreichen eines thixotropen Verhaltens der Paste zugesetzt wird. Zur Anwendung kommt ein pulverförmiges, modifiziertes, hydriertes Rizinusöl, ®LUVOTHIX HT (Lehmann & Voss & Co.) in einer Konzentration von 5,0 %.

Das LUVOTHIX HT wird in dem SACOLYD L 640 bei 75 bis 95°C gelöst. Die abgekühlte, stichfeste Masse wird einmal über ein Dreiwalzwerk gegeben. Damit ist die Paste fertiggestellt.

Verwendet wird eine Teller-Farbenausreibmaschine (Muller), wie in DIN EN ISO 8780-5 (April 1995) beschrieben. Zur Anwendung kommt ein ENGELSMANN JEL 25/53 Muller mit einem wirksamen Tellerdurchmesser von 24 cm. Die Drehzahl des unteren Tellers beträgt ca. 75 min⁻¹. Durch Einhängen eines 2,5 kg Belastungsgewichtes auf den Belastungsbügel wird die Kraft zwischen den Tellern auf ca. 0,5 kN eingestellt. Es wird die oben angegebene Menge Pigment und 5,00 g Paste in drei Stufen zu je 25 Umdrehungen nach dem in DIN EN ISO 8780-5 (April 1995) Abschnitt 8.1 beschriebenen Verfahren dispergiert.

Anschließend wird die Pigment-Pasten-Mischung in einen Pastenteller eingestrichen, der in seiner Funktion dem Pastenteller in DIN 55983 (Dezember 1983) entspricht. Die zum Pastenteller gehörige Rakel wird über die mit der Pigment-Pasten-Mischung gefüllte Vertiefung des Tellers gezogen, so daß eine glatte Oberfläche entsteht. Die Rakel wird dabei in einer Richtung mit einer Geschwindigkeit von ca. 3 bis 7 cm/s bewegt. Die glatte Oberfläche wird innerhalb weniger Minuten gemessen.

### 2. Aufhellung (Farbstärke)

Das Pigment wird mit einer Teller-Farbenausreibmaschine (Muller) in einem nichttrocknenden Prüfbindemittel präpariert. Das Prüfbindemittel (Paste) besteht aus zwei Komponenten.

### Komponente 1:

Komponente 1 ist ein Alkydharz-Bindemittel auf Basis Leinöl und Phthalsäureanhydrid. Es entspricht den Spezifikationen, die in den Normen DIN EN ISO 787-24 (Oktober 1995), ISO 787-25:1993 und DIN 55983 (Dezember 1983) als Anforderungen an ein Prüfbindemittel für Farbpigmente genannt werden. Zur Anwendung kommt SACOLYD L 640.

### Komponente 2:

Komponente 2 ist ein rheologisches Additiv, welches zum Erreichen eines thixotropen Verhaltens der Paste zugesetzt wird. Zur Anwendung kommt ein pulverförmiges, modifiziertes, hydriertes Rizinusöl, LUVOTHIX HT in der Konzentration von 5,0 %.

Das LUVOTHIX HT wird in dem SACOLYD L 640 bei 75 bis 95°C gelöst. Die abgekühlte, stichfeste Masse wird einmal über ein Dreiwalzwerk gegeben. Damit ist die Paste fertiggestellt.

Verwendet wird eine Teller-Farbenausreibmaschine (Muller), wie in DIN EN ISO 8780-5 (April 1995) beschrieben. Zur Anwendung kommt ein ENGELSMANN JEL 25/53 Muller mit einem wirksamen Tellerdurchmesser von 24 cm. Die Drehzahl des unteren Tellers beträgt ca. 75 min⁻¹. Durch Einhängen eines 2,5 kg Belastungsgewichtes auf den Belastungsbügel wird die Kraft zwischen den Tellern auf ca. 0,5 kN eingestellt.

Als Aufhellmittel wird ein handelsübliches Titandioxidpigment, ®BAYERTITAN R-KB-2 (Bayer AG), verwendet. R-KB-2 entspricht in seiner Zusammensetzung dem Typ R 2 in ISO 591-1977. Wird statt R-KB-2 ein anderes R 2-Pigment verwendet, so können bei der Farbmessung abweichende CIELAB-Koordinaten erhalten werden.

Es werden 0,400 g Pigment, 2,000 g BAYERTITAN R-KB-2 und 3,00 g Paste in fünf Stufen zu je 25 Umdrehungen nach dem in DIN EN ISO 8780-5 (April 1995) Abschnitt 8.1 beschriebenen Verfahren dispergiert.

Anschließend wird die Pigment-Pasten-Mischung in einen Pastenteller eingestrichen, der in seiner Funktion dem Pastenteller in DIN 55983 (Dezember 1983) entspricht.

Die zum Pastenteller gehörige Rakel wird über die mit der Pigment-Pasten-Mischung gefüllte Vertiefung des Tellers gezogen, so daß eine glatte Oberfläche entsteht. Die Rakel wird dabei in einer Richtung mit einer Geschwindigkeit von ca. 3 bis 7 cm/s bewegt. Die glatte Oberfläche wird innerhalb weniger Minuten gemessen.

### 3. Farbmeßgerät

Es wird ein Spektrophotometer ("Farbmeßgerät") mit der Meßgeometrie d/8 ohne Glanzfalle verwendet. Diese Meßgeometrie ist in ISO 7724/2-1984 (E)Punkt 4.1.1, in DIN 5033, Teil 7 (Juli 1983) Punkt 3.2.4 und in DIN 53236 (Januar 1983) Punkt 7.1.1 beschrieben.

Zur Anwendung kommt ein DATAFLASH 200 Meßgerät der Firma Datacolor International.

Das Farbmeßgerät wird gegen einen weißen, keramischen Arbeitsstandard, kalibriert, wie in ISO 7724/2-1984 (E)Punkt 8.3 beschrieben. Die Reflexionsdaten des Arbeitsstandards gegen einen ideal mattweißen Körper sind im Farbmeßgerät hinterlegt, so daß nach Kalibrierung mit dem weißen Arbeitsstandard alle Farbmessungen auf den ideal mattweißen Körper bezogen werden. Die Schwarzpunktkalibrierung wird mit einem schwarzen Hohlkörper des Farbmeßgeräteherstellers ausgeführt.

### 4. Farbmessung

Eine möglicherweise vorhandene Glanzfalle ist ausgeschaltet. Die Temperatur von Farbmeßgerät und Prüfling beträgt ca. 25°C ±5°C.

### 4.1 Messung des Lackaufstriches

Der Aufstrich wird so an das Farbmeßgerät gelegt, so daß die Meßöffnung eine mittlere Stelle der Lackschicht abdeckt. Der Aufstrich muß vollständig und plan anliegen. Die Meßöffnung muß vollständig von der Lackschicht bedeckt sein. Anschließend erfolgt die Messung.

### 4.2 Messung des Pastentellers

Die Farbmessung erfolgt unmittelbar nach dem Einstreichen in den Pastenteller. Der gefüllte Pastenteller wird so an das Farbmeßgerät gelegt, daß die Meßöffnung vollständig von der mit Paste bestrichenen Vertiefung des Tellers ausgefüllt ist. Der Teller muß vollständig und plan anliegen. Anschließend erfolgt die Messung.

### 5. Berechnung der CIE-Koordinaten

Die CIE 1976 (L*, a*, b*)-Koordinaten (kurz CIELAB) eines Reflexionsspektrums sind abhängig von den gewählten Randbedingungen bei der Messung und der Auswertung. Die angegebenen Daten für den Wellenlängenbereich von 400 nm bis 700 nm und das Intervall von 20 nm sind gültig für die zur Zeit eingesetzten Dataflash 2000 Farbmeßgeräte (Stand: 7/97).

Es werden nur die Koordinaten L*, a* und b* angegeben. Alle weiteren Größen sind redundant.

Aus dem gemessenen Reflexionsspektrum werden nach den Berechnungsanwiesungen in ASTM E 308-1985, Punkt 7 die CIE-Koordinaten L*, a* und b* von 1976 berechnet. Zur Verwendung kommen die Gewichtungsfunktionen der Normlichtart C und des 2°-Normalbeobachters von 1931 in ASTM E 308-1985, Table 5.6. Der Wellenlängenbereich liegt zwischen 400 nm und 700 nm. Das Wellenlängenintervall beträgt 20 nm. Es wird rechnerisch kein Glanz abgezogen. Die Ergebnisse L*, a* und b* werden auf ganze Zahlen gerundet.

Die CIE-Koordinaten werden in DIN 5033 Teil 3 (Juli 1992) Koordinaten des L*a*b*-Farbenraumes genannt. In ISO 7724/3-1984 wird die Abkürzung CIELAB-Farbraum eingeführt. Die Koordinaten sind dimensionslos.

### 6. Bestimmung des Chrom- und Mangangehalts

Die Bestimmung des Chrom- und Mangangehalts erfolgt durch ICP-MS. Die Nachweisgrenze der Bestimmungsmethode beträgt 10 µg/kg.

### 7. Bestimmung des Chloridgehalts

Die Bestimmung des Chloridgehalts erfolgt durch Ionenchromatographie.

Die Erfindung soll anhand des nachfolgenden Beispiels näher erläutert werden.

### Beispiel

In einen Rührkessel mit pH-Wert-Regelung und einer Vorrichtung zur Begasung mit Luft wurden 108,61 eines Gelbkeims (BET-Oberfläche 61 m²/g, 72,7 g/l FeSO₄, 36,0 g/l α-FeOOH) eingefüllt. Zu dieser Keimsuspension wurden 1691 einer vorbehandelten Eisen-II-chloridlösung mit 228,6 g/l FeCl₂ gepumpt. Dann wurde Natronlauge [300 g/l] mit einer derartigen Geschwindigkeit zugegeben, daß der pH-Wert der Suspension um 0,2 Einheiten pro Stunde anstieg. Gleichzeitig wurde mit 801 Luft pro Stunde oxidiert. Die pH-Steigerung wurde bei Erreichen eines pH-Werts von 3,85 beendet. Dieser pH-Wert wurde mit Natronlauge konstant gehalten. Die Begasung bleibt angeschaltet. Die Reaktion war beendet, sobald der Fe-II-Gehalt kleiner als 1 mol-% war.

Das erhaltene Eisenoxidgelbpigment wurde filtriert, mit Wasser gewaschen, sprühgetrocknet und mit einer Dampfstrahlmühle gemahlen.

Das Produkt wies im Vergleich zu Bayferrox 3905 (Produkt der Bayer AG) bzw. absolut folgende farbliche Eigenschaften auf:

| Messung der Farbstärke (in der Aufhellung mit Bayertitan R-KB2): | |
|---|---|
| Farbstärke | 100 % (Bezug: Bayferrox® 3905 Standard 87) |
| delta a* | 0,1 CIELAB-Einheiten |
| delta b* | -0,6 CIELAB-Einheiten |

| Absolutwerte: | |
|---|---|
| L* | 82,1 CIELAB-Einheiten |
| a* | 4,2 CIELAB-Einheiten |
| b* | 38,0 CIELAB-Einheiten |

| Messung der Farbstärke (im Purton; Bezug: Bayferrox ® 3905 Standard 87) | |
|---|---|
| delta L* | -0,1 CIELAB-Einheiten |
| delta a* | -0,1 CIELAB-Einheiten |
| delta b* | -0,7 CIELAB-Einheiten |

| Absolutwerte: | |
|---|---|
| L* | 63,4 CIELAB-Einheiten |
| a* | 9,0 CIELAB-Einheiten |
| b* | 48,9 CIELAB-Einheiten |

| | |
|---|---|
| Cr-Gehalt | 10 mg/kg Pigment |
| Mn-Gehalt | 0,013 %, bezogen auf Pigment |
| Cl-Gehalt | 0,12 %, bezogen auf Pigment |

### Vergleichsbeispiel

In einen Rührkessel mit pH-Wert-Regelung und einer Vorrichtung zur Begasung mit Luft wurden 108,6 eines Gelbkeims (BET-Oberfläche 61 m²/g, 72,7 g/l FeSO₄ 36,0 g/l α-FeOOH) eingefüllt. Zu dieser Keimsuspension wurden 1691 einer nicht vorbehandelten Eisen-II-chloridlösung mit 228,6 g/l FeCl₂ gepumpt.

Dann wurde Natronlauge [300 g/l] mit einer derartigen Geschwindigkeit zugegeben, daß der pH-Wert der Suspension um 0,2 Einheiten pro Stunde anstieg. Gleichzeitig wurde mit 80 Liter Luft pro Stunde oxidiert. Die pH-Steigerung wurde bei Erreichen eines pH-Wertes von 3,85 beendet. Dieser pH-Wert wurde mit Natronlauge konstant gehalten. Die Begasung blieb angeschaltet. Die Reaktion war beendet, sobald der Fe-II-Gehalt kleiner als 1 mol-% war.

Das erhaltene Eisenoxidgelbpigment wurde filtriert, mit Wasser gewaschen, spühgetrocknet und mit einer Dampfstrahlmühle gemahlen.

Das Produkt weist im Vergleich zu Bayferrox® 3905 (Produkt der Bayer AG) bzw. absolut folgende farbliche Eigenschaften auf:

| Messung der Farbstärke (in der Aufhellung mit Bayertitan R-KB2): | |
|---|---|
| Farbstärke | 100 % (Bezug: Bayferrox 3905 ® Standard 87) |
| delta a* | 0,1 CIELAB-Einheiten |
| delta b* | -0,4 CIELAB-Einheiten |

| Absolutwerte: | |
|---|---|
| L* | 82,1 CIELAB-Einheiten |
| a* | 4,3 CIELAB-Einheiten |
| b* | 38,2 CIELAB-Einheiten |

| Messung der Farbstärke (im Purton; Bezug: Bayferrox 3905 Standard 87) | |
|---|---|
| delta L* | -0,7 CIELAB-Einheiten |
| delta a* | -0,1 CIELAB-Einheiten |
| delta b* | -1,9 CIELAB-Einheiten |

| Absolutwerte: | |
|---|---|
| L* | 62,7 CIELAB-Einheiten |
| a* | 9,1 CIELAB-Einheiten |
| b* | 47,7 CIELAB-Einheiten |

| | |
|---|---|
| Cr-Gehalt | 180 mg/kg Pigment |
| Mn-Gehalt | 0,017 %, bezogen auf Pigment |
| Cl-Gehalt | 0,12 %, bezogen auf Pigment |

## Patentansprüche

1. Eisenoxidgelbpigmente mit einer Helligkeit L* im Purton von 62,0 bis 64,0 CIELAB-Einheiten, einem a*-Wert von 8,5 bis 10,5 CIELAB-Einheiten, einem b*-Wert von 48,5 bis 50,5 CIELAB-Einheiten, einer Helligkeit L* in der Aufhellung von 81,6 bis 82,5 CIELAB-Einheiten, einem a*-Wert von 3,8 bis 4,8 CIELAB-Einheiten, einem b*-Wert von 37,5 bis 39,5 CIELAB-Einheiten, einem Chromgehalt von weniger als 40 mg/kg Eisenoxidgelbpigment, einem Chloridgehalt von mindestens 0,05 Gew.-% und weniger als 0,3 Gew.-%, bezogen auf Eisenoxidgelbpigment und einem Mangangehalt von 0,007 bis 0,055 Gew.-%, bezogen auf Eisenoxidgelbpigment.

2. Verfahren zur Herstellung von Eisenoxidgelbpigmenten nach dem Fällverfahren, **dadurch gekennzeichnet, daß**
a) zu einer sauren Fe-II-chloridlösung mit einem FeCl₂-Gehalt von 50 bis 450 g/l eine alkalische Komponente unter intensivem Rühren in einer Menge zugegeben wird, die ausreicht, um den pH-Wert der Lösung zwischen 3 und 5 einzustellen,
b) gegebenenfalls zusätzlich ein Flockungshilfsmittel vor oder nach der Zugabe der alkalischen Komponente oder gemeinsam mit der alkalischen Komponente der Lösung zugegeben wird,
c) gegebenenfalls nach der Zugabe der alkalischen Komponente und des gegebenenfalls zugesetzten Flockungshilfsmittels oxidiert wird,
d) der nach der Behandlung unter a) bis c) anfallende Feststoff von der Lösung abgetrennt wird,
e) die unter d) angefallene Lösung zu einer nach dem Fällverfahren hergestellten α-FeOOH-Keimsuspension zugegeben wird und zwar in einer Menge, die der 4- bis 8-fachen molaren Menge an Eisen der gesamten Keimsuspension (also Eisen aus Eisenoxidhydroxid und Eisen aus nichtumgesetzter Eisenverbindung) entspricht,
f) die unter e) angefallene Suspension auf eine Temperatur von 30 bis 95°C, bevorzugt 30 bis 85°C, besonders bevorzugt von 55 bis 75°C, unter guter Durchmischung aufgeheizt wird,
g) anschließend mit einem Oxidationsmittel oxidiert wird, wobei das Oxidationsmittel so zugegeben wird, daß 0,5 bis 10 mol-% Eisen pro Stunde, bevorzugt 0,5 bis 2,0 mol-% Eisen pro Stunde, oxidiert werden, und gleichzeitig der pH-Wert mit einer alkalischen Komponente mit einer Geschwindigkeit von 0,01 bis 0,4 pH-Werteinheiten/Stunde auf einem End-pH-Wert von 3,0 bis 5,0 erhöht wird,
h) gegebenenfalls bei konstantem pH-Wert zwischen 3,0 und 5,0 weiter oxidiert wird,
i) die Oxidation beendet wird, sobald der Fe-II-Gehalt der Suspension kleiner als 1 mol-% ist,
j) abschließend der Feststoff aus i) abgetrennt, gewaschen, getrocknet und gemahlen wird.

3. Verfahren gemäß Anspruch 2, **dadurch gekennzeichnet, daß** als alkalische Komponente Natronlauge, Natriumcarbonat, Magnesiumcarbonat, MgO, Mg(OH)₂, CaO, Ca(OH)₂ oder Ammoniak, eingesetzt werden.

4. Verwendung der Eisenoxidgelbpigmente gemäß Anspruch 1 oder der nach dem Verfahren gemäß den Ansprüchen 2 und 3 hergestellten Eisenoxidgelbpigmente zur Einfärbung von Baustoffen.

5. Verwendung der Eisenoxidgelbpigmente gemäß Anspruch 1 oder der nach dem Verfahren gemäß den Ansprüchen 2 und 3 hergestellten Eisenoxidgelbpigmente zur Einfärbung von Kunststoffen oder Papier.

6. Verwendung der Eisenoxidgelbpigmente gemäß Anspruch 1 oder der nach dem Verfahren gemäß den Ansprüchen 2 und 3 hergestellten Eisenoxidgelbpigmente zur Herstellung von Farben oder Lacken.

7. Verwendung der Eisenoxidgelbpigmente gemäß Anspruch 1 oder der nach dem Verfahren gemäß den Ansprüchen 2 und 3 hergestellten Eisenoxidgelbpigmente zur Herstellung von Farbmittelzubereitungen oder zur Herstellung von Farbmitteln für die Lebensmittelindustrie.

## Claims

1. Iron oxide yellow pigments with a brightness L* as the full shade of 62.0 to 64.0 CIELAB units, an a* value of 8.5 to 10.5 CIELAB units, a b* value of 48.5 to 50.5 CIELAB units, a brightness L* when whitened of 81.6 to 82.5 CIELAB units, an a* value of 3.8 to 4.8 CIELAB units, a b* value of 37.5 to 39.5 CIELAB units, a chromium content of less than 40 mg/kg iron oxide yellow pigment, a chloride content of at least 0.05 % by weight and less than 0.3 % by weight with respect to iron oxide yellow pigment, and a manganese content of 0.007 to 0.055 % by weight with respect to iron oxide yellow pigment.

2. A method of producing iron oxide yellow pigments by a precipitation method, **characterised in that**
a) an alkaline component is added to an acidic Fe(II) chloride solution with an FeCl₂ content of 50 to 450 g/l, with intensive stirring and in an amount which is sufficient to adjust the pH of the solution to between 3 and 5,
b) a flocculant is optionally added in addition to the solution, before or after the addition of the alkaline component or together with the alkaline component,
c) oxidation is optionally effected after the addition of the alkaline component and of the flocculant which is optionally added,
d) the solid formed after treatment as in a) to c) is separated from the solution,
e) the solution formed in d) is added to a suspension of α-FeOOH nuclei prepared by a precipitation method, in an amount which corresponds to 4- to 8 times the molar amount of iron of the total suspension of nuclei (namely iron from iron oxide-hydroxide and iron from an unreacted iron compound),
f) the suspension obtained as in e) is heated to a temperature of 30 to 95°C, preferably 30 to 85°C, most preferably 55 to 75°C, with good mixing throughout,
g) oxidation is subsequently effected with an oxidising agent, wherein the oxidising agent is added so that 0.5 to 10 mole % iron per hour, preferably 0.5 to 2.0 mole % iron per hour, is oxidised, and the pH is simultaneously increased, with an alkaline component, at a rate of 0.01 to 0.4 pH units/hour, to a final pH of 3.0 to 5.0,
h) further oxidation is optionally effected at a constant pH between 3.0 and 5.0,
i) oxidation is terminated as soon as the Fe(II) content of the suspension is less than 1 mole %,
j) the solid from i) is finally separated, washed, dried and ground.

3. A method according to claim 2, **characterised in that** sodium hydroxide solution, sodium carbonate, magnesium carbonate, MgO, Mg(OH)₂, CaO, Ca(OH)₂ or ammonia is used as the alkaline component.

4. The use of the iron oxide yellow pigments according to claim 1 or of iron oxide pigments produced by the method according to claims 2 and 3 for the coloration of building materials.

5. The use of the iron oxide yellow pigments according to claim 1 or of iron oxide pigments produced by the method according to claims 2 and 3 for the coloration of plastics or paper.

6. The use of the iron oxide yellow pigments according to claim 1 or of iron oxide pigments produced by the method according to claims 2 and 3 for the production of dyes or lacquers.

7. The use of the iron oxide yellow pigments according to claim 1 or of iron oxide pigments produced by the method according to claims 2 and 3 for the production of colouring agents for the food industry.

## Revendications

1. Oxydes de fer pigmentaires jaunes présentant un éclaircissement L* en ton pur de 62,0 à 64,0 unités CIELAB, une valeur a* de 8,5 à 10,5 unités CIELAB, une valeur b* de 48,5 à 50,5 unités CIELAB, un éclaircissement L* en ton éclairci de 81,6 à 82,5 unités CIELAB, une valeur a* de 3,8 à 4,8 unités CIELAB, une valeur b* de 37,5 à 39,5 unités CIELAB, une teneur en chrome inférieure à 40 mg/kg de l'oxyde de fer pigmentaire jaune, une teneur en chlorure d'au moins 0,05 % en poids mais inférieure à 0,3 % du poids de l'oxyde de fer pigmentaire jaune et une teneur en manganèse de 0,007 à 0,055 % du poids de l'oxyde de fer pigmentaire jaune.

2. Procédé pour la préparation d'oxydes de fer pigmentaires jaunes par précipitation, **caractérisé en ce que**
a) à une solution acide de chlorure de fer-II à une teneur en FeCl₂ de 50 à 450 g/l, on ajoute sous agitation intensive un composant alcalin en quantité suffisante pour régler le pH de la solution entre 3 et 5,
b) le cas échéant, avant ou après le composant alcalin ou en même temps que le composant alcalin, on ajoute à la solution un produit auxiliaire floculant,
c) le cas échéant, après le composant alcalin et le produit auxiliaire floculant éventuel, on oxyde,
d) on sépare la matière solide formée après les traitements a) à c) de la solution,
e) on ajoute à la solution obtenue en d), une suspension de germes d'α-FeOOH préparée par précipitation en quantité correspondant à 4 à 8 fois la quantité molaire de fer de la suspension de germes totale (à savoir le fer de l'oxyde de fer basique et le fer du dérivé du fer non converti),
f) on chauffe la suspension obtenue en e) à une température de 30 à 95°C, de préférence de 30 à 85°C et plus spécialement de 55 à 75°C en mélangeant avec soin,
g) on oxyde ensuite à l'aide d'un agent oxydant qu'on ajoute de manière à oxyder 0,5 à 10 mol % de fer par heure, de préférence 0,5 à 2,0 mol % de fer par heure, et simultanément, on accroît le pH à l'aide d'un composant alcalin à une vitesse de 0,01 à 0,4 unité de pH par heure, jusqu'à un pH final de 3,0 à 5,0,
h) le cas échéant, on poursuit l'oxydation à pH constant entre 3,0 et 5,0,
i) on arrête l'oxydation dès que la teneur en Fe-II de la suspension est tombée au-dessous de 1 mol %,
j) pour terminer, on sépare la matière solide obtenue en i), on la lave, on la sèche et on la broie.

3. Procédé selon la revendication 2, **caractérisé en ce que** le composant alcalin utilisé consiste en lessive de soude, carbonate de sodium, carbonate de magnésium, MgO, Mg(OH)₂, CaO, Ca(OH)₂ ou ammoniac.

4. Utilisation des oxydes de fer pigmentaires jaunes selon la revendication 1 ou des oxydes de fer pigmentaires jaunes préparés par le procédé selon les revendications 2 et 3 pour la coloration de matériaux du bâtiment.

5. Utilisation des oxydes de fer pigmentaires jaunes selon la revendication 1 ou des oxydes de fer pigmentaires jaunes préparés par le procédé selon les revendications 2 et 3 pour la coloration de résine synthétiques ou du papier.

6. Utilisation des oxydes de fer pigmentaires jaunes selon la revendication 1 ou des oxydes de fer pigmentaires jaunes préparés par le procédé selon les revendications 2 et 3 pour la préparation d'encres ou de peintures.

7. Utilisation des oxydes de fer pigmentaires jaunes selon la revendication 1 ou des oxydes de fer pigmentaires jaunes préparées par le procédé selon les revendications 2 et 3 pour la préparation de compositions tinctoriales ou pour la préparation de colorants pour l'industrie alimentaire.
